# FASCICULE DE BREVET EUROPEEN

(11) **EP 0 932 266 B1**
(45) Date de publication et mention de la délivrance du brevet: **27.02.2002**
(21) Numéro de dépôt: 99400008.1
(22) Date de dépôt: 05.01.1999
(51) Int. Cl.: H04B 7/185

(54) **Dispositif pour permettre l'utilisation dans un aéronef de moyens de radiocommunication**
Anordnung zum Emmöglischen einer Funkverbindung in einem Flugzeug
Device for allow the use of radio communication in a aircraft

(30) Priorité: 16.01.1998 FR 9800427
(43) Date de publication de la demande: 28.07.1999
(73) Titulaire: AEROSPATIALE MATRA, 75016 Paris (FR)
(72) Inventeur: Corbefin, René, 31700 Mondonville (FR); Lemozit, Christian, 31820 Pibrac (FR)
(74) Mandataire: Bonnetat, Christian

(56) Documents cités:
- WO-A-94/28684
- WO-A-96/02094
- US-A- 5 438 610

## Description

La présente invention concerne un dispositif pour permettre l'utilisation dans un aéronef d'au moins un moyen de radiocommunication personnel.

Bien que la présente invention soit plus particulièrement appropriée à un téléphone mobile, c'est-à-dire à un dispositif autonome de télécommunication basé sur des techniques de communication utilisées par des réseaux cellulaires, elle peut également s'appliquer à d'autres moyens de radiocommunication, tels que par exemple des terminaux informatiques portables. De façon connue, de tels terminaux portables permettent de réaliser une communication informatique, grâce à leur connexion à des réseaux informatiques à l'aide de modem radio intégrés.

On sait que les téléphones mobiles dont le nombre s'est fortement accru en peu de temps, grâce à un coût d'acquisition réduit et à un prix de communication abordable, sont interdits d'utilisation à bord des aéronefs, notamment des avions de transport civil, pour des raisons de sécurité. Cette interdiction est en effet nécessaire pour éviter toute interférence électromagnétique avec des systèmes électroniques de bord de l'aéronef, susceptible de se produire, en raison d'un fonctionnement nécessairement à puissance élevée du moyen de radiocommunication pour pouvoir être capté de l'extérieur, une telle interférence pouvant bien entendu être très dommageable, en particulier au décollage et à l'atterrissage de l'aéronef.

Aussi, lorsque les passagers d'un avion de transport veulent communiquer avec leurs interlocuteurs habituels, ils doivent utiliser des systèmes de communication prévus le cas échéant à cet effet sur l'avion.

Ainsi, en ce qui concerne par exemple les communications téléphoniques, des combinés spécifiques qui équipent généralement les avions sont souvent mis à la disposition des passagers, pour leur permettre d'appeler les abonnés du réseau téléphonique terrestre.

Les moyens de communication radio mis en oeuvre à cet effet utilisent :
- soit des satellites géostationnaires ;
- soit des installations de radiocommunication prévues au sol et destinées au transport aérien.

De plus, des installations spécifiques doivent être agencées au sol, pour coopérer avec ces moyens de communication radio, et notamment pour transmettre les communications téléphoniques vers les personnes appelées.

En revanche, l'appel d'un passager de l'avion par un abonné se trouvant au sol n'est pas possible, notamment en raison de procédures complexes de transmission de l'appel vers ledit passager à bord de l'avion.

Les solutions précitées ne sont donc pas satisfaisantes, notamment puisqu'elles utilisent des installations complexes et coûteuses, destinées en priorité au transport aérien, ce qui entraîne un coût de communication extrêmement élevé.

De plus, ces solutions présentent les inconvénients suivants :
- les moyens de communication qui utilisent des installations au sol ne présentent qu'une couverture géographique limitée. De plus, comme plusieurs systèmes de communication de types différents existent, différents équipements appropriés sont nécessaires sur l'aéronef pour obtenir un champ de communication satisfaisant ; et
- les moyens de communication qui utilisent des satellites géostationnaires ne présentent pas une couverture mondiale (les zones polaires ne sont, par exemple, pas couvertes) et le nombre limité de canaux disponibles réduit les capacités de communication.

Par le document WO-A-96/02094, on connaît un dispositif pour permettre l'utilisation dans un aéronef d'au moins un moyen de radiocommunication personnel, en particulier un téléphone mobile. Ce dispositif connu comporte une première antenne susceptible d'émettre et de capter à l'extérieur de l'aéronef des ondes émises par un réseau extérieur, une seconde antenne susceptible d'émettre et de capter à l'intérieur de l'aéronef des ondes émises par le moyen de radiocommunication, un transpondeur couplé aux deux antennes comportant deux systèmes d'émission et de réception couplés chacun à une des antennes, et une unité centrale assurant l'interconnection entre les deux systèmes.

Toutefois, l'utilisation d'un moyen de radiocommunication personnel à bord d'un aéronef, à l'aide de ce dispositif connu, pose des problèmes de sécurité dûs à des risques d'interférence avec des moyens électroniques de bord.

La présente invention a pour objet de remédier à ces inconvénients. Elle concerne un dispositif simple et peu coûteux pour permettre l'utilisation de façon usuelle et sans risque, dans un aéronef, d'au moins un moyen de radiocommunication personnel du type rappelé ci-dessus, en particulier un téléphone mobile.

A cet effet, selon l'invention, ledit dispositif comportant :
- au moins une première antenne susceptible d'émettre et de capter, à l'extérieur de l'aéronef, des ondes électromagnétiques respectivement captées et émises par des réseaux satellites ou des réseaux sol désignés de réseaux extérieurs ;
- au moins une seconde antenne susceptible d'émettre et de capter, à l'intérieur de l'aéronef, des ondes électromagnétiques respectivement captées et émises par un moyen de radiocommunication d'un passager ; et
- un transpondeur qui comprend :
   . un premier système d'émission et de réception d'ondes électromagnétiques, couplé à ladite première antenne ;
   . un second système d'émission et de réception d'ondes électromagnétiques, couplé à ladite seconde antenne ; et
   . une unité centrale transmettant, le cas échéant après adaptation, des signaux reçus par l'un desdits premier et second systèmes d'émission et de réception à l'autre système d'émission et de réception,
   est remarquable en ce que ledit transpondeur comprend de plus des moyens d'autorité pour imposer audit moyen de radiocommunication de fonctionner à puissance réduite et contrôler son fonctionnement et en ce que lesdits moyens d'autorité agissent, par l'intermédiaire dudit second système d'émission et de réception et de ladite seconde antenne, sur un système d'auto-adaptation de puissance intégré dans ledit moyen de radiocommunication.

Ainsi, grâce à l'invention, tout passager de l'aéronef peut utiliser un moyen de radiocommunication personnel, par exemple un téléphone mobile ou un terminal portable, c'est-à-dire il peut se raccorder à un réseau téléphonique, dans les mêmes conditions de service que s'il se trouvait à terre dans son bureau ou sa voiture, et ceci sans danger d'interférence avec des systèmes électroniques de bord, puisque la puissance de fonctionnement dudit moyen de radiocommunication est abaissée de manière à ne pas permettre de telles interférences.

De plus, grâce audit dispositif conforme à l'invention, le détenteur d'un tel moyen de radiocommunication peut non seulement appeler un correspondant, mais aussi être appelé à son numéro personnel, dans les mêmes conditions qu'au sol, et ceci quelle que soit la position géographique de l'aéronef. En particulier, ledit moyen de radiocommunication fonctionne de façon usuelle et ce fonctionnement ne nécessite aucune modification structurelle ou fonctionnelle de ce dernier.

Dans le cadre de la présente invention, on entend par transpondeur tout dispositif permettant d'établir des communications bidirectionnelles entre deux réseaux radiofréquences distincts, en l'occurrence ledit réseau extérieur et un réseau radiofréquence créé à l'intérieur de l'aéronef par ladite seconde antenne et ledit second système d'émission et de réception.

En d'autres termes, ledit transpondeur permet de créer à bord de l'aéronef un environnement compatible avec l'ensemble des moyens de radiocommunication (téléphones mobiles, ...) présents à bord, et à transformer cet environnement, à l'extérieur de l'aéronef, en un environnement compatible avec des constellations de satellites et/ou des installations du sol faisant partie dudit réseau téléphonique.

En outre, de façon avantageuse, lesdits moyens d'autorité sont intégrés dans ladite unité centrale, ce qui permet de simplifier le dispositif conforme à l'invention.

Par ailleurs, ledit dispositif comporte avantageusement, pour des moyens de radiocommunication munis de batteries d'accumulateurs et de systèmes de chargement électrique des batteries, au moins un moyen d'alimentation électrique prévu à proximité d'un siège de passager de l'aéronef, le système de chargement électrique d'un moyen de radiocommunication pouvant être raccordé en vue de son chargement audit moyen d'alimentation électrique.

En outre, avantageusement, ledit dispositif comporte également un moyen d'inhibition intégré, par exemple, dans l'unité centrale et susceptible d'émettre à l'intérieur de l'aéronef, sous forme d'ondes électromagnétiques, des ordres d'interdiction d'émission vers un moyen de radiocommunication, afin d'empêcher l'utilisation dudit moyen de radiocommunication lorsque cela s'avère nécessaire, notamment pour des raisons de sécurité, c'est-à-dire essentiellement aux basses altitudes pour minimiser tout risque de conflit avec des réseaux cellulaires téléphoniques terrestres existants.

Bien entendu, grâce à l'invention, cette interdiction d'utilisation est très réduite et est généralement limitée à quelques minutes durant les phases de décollage et d'atterrissage.

Les figures du dessin annexé feront bien comprendre comment l'invention peut être réalisée. Sur ces figures, des références identiques désignent des éléments semblables.

La figure 1 illustre schématiquement le principe de communication au moyen d'un dispositif conforme à l'invention.

La figure 2 est le schéma synoptique d'un transpondeur conforme à l'invention.

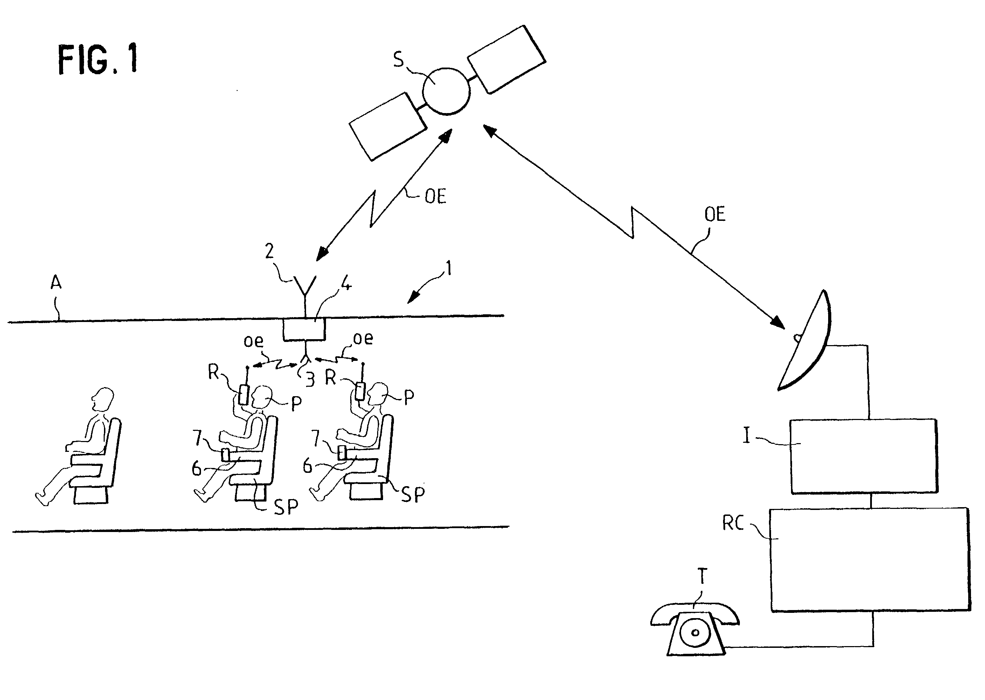

Le dispositif 1 conforme à l'invention est destiné à permettre aux passagers P d'un aéronef A, notamment un avion de transport civil, d'utiliser un moyen de radiocommunication R personnel, par exemple un téléphone mobile ou un terminal informatique portable, pour communiquer avec un correspondant se trouvant par exemple au sol, tel que représenté schématiquement sur la figure 1.

A cet effet, des ondes électromagnétiques OE émises à l'aide dudit dispositif 1 à partir de l'aéronef A sont véhiculées, par l'intermédiaire d'un système de satellites S et/ou d'installations I prévus sur terre, vers ce correspondant non représenté, qui se trouve sur un réseau téléphonique terrestre extérieur (soit sur un réseau câblé RC, auquel sont raccordés un ensemble de postes de téléphone T, dont uniquement un poste T est représenté sur la figure 1, soit sur un réseau radiotéléphonique non représenté).

Pour permettre le raccordement du moyen de radiocommunication R audit réseau extérieur RC et pour permettre un fonctionnement normal sans risque d'interférence électromagnétique avec des systèmes électroniques de bord de l'aéronef A, ledit dispositif 1 comporte selon l'invention :
- une antenne 2 susceptible d'émettre et de capter, à l'extérieur de l'aéronef A, des ondes électromagnétiques OE respectivement captées et émises par ledit système de satellites S et/ou d'installations I, faisant partie dudit réseau extérieur RC ;
- une antenne 3 susceptible d'émettre et de capter, à l'intérieur de l'aéronef A, des ondes électromagnétiques oe respectivement captées et émises par ledit moyen de radiocommunication R ; et
- un transpondeur 4 qui est précisé ci-dessous et qui permet d'établir des communications entre le réseau téléphonique RC et un réseau radiofréquence créé à l'intérieur de l'aéronef A, auquel peuvent être raccordés les moyens de radiocommunication R des passagers P de l'aéronef A. En d'autres termes, le transpondeur 4 est en liaison avec l'ensemble de ces moyens de radiocommunication R présents à bord de l'aéronef.

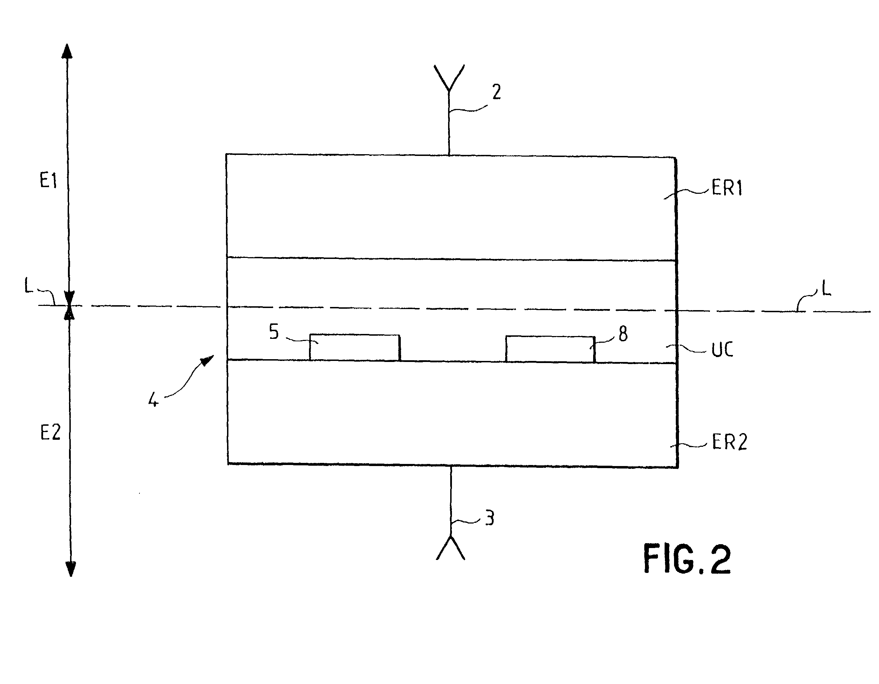

Sur la figure 2, on a représenté en traits interrompus une ligne L représentative de la structure de l'aéronef A et illustrant la séparation entre un espace E1 externe à l'aéronef A et couvert par ledit réseau extérieur RC et un espace E2 interne à l'aéronef A et couvert par ledit réseau radiofréquence.

Selon l'invention, ledit transpondeur 4 comporte, tel que représenté sur cette figure 2 :
- un système ER1 d'émission et de réception d'ondes électromagnétiques OE de standard satellitaire, couplé à ladite antenne 2 ;
- un système ER2 d'émission et de réception d'ondes électromagnétiques oe de standard cellulaire, couplé à ladite antenne 3 ;
- une unité centrale UC transmettant, le cas échéant après adaptation, des signaux reçus par l'un desdits systèmes ER1 ou ER2 d'émission et de réception à l'autre système ER2 ou ER1 ; et
- des moyens d'autorité 5 pour imposer audit moyen de radiocommunication R de fonctionner à puissance très réduite et contrôler son fonctionnement. A cet effet, lesdits moyens d'autorité 5 qui sont intégrés dans l'unité centrale UC agissent, par l'intermédiaire du système ER2 et de l'antenne 3, sur un système d'auto-adaptation de puissance intégré de façon usuelle dans ledit moyen de radiocommunication R.

On notera de plus que ladite unité centrale UC comprend selon l'invention une logique de traitement de transactions, de conversion de formats et de gestion et de contrôle du dispositif 1.

Ainsi, tout passager SP de l'aéronef A peut utiliser un moyen de radiocommunication personnel, par exemple un téléphone mobile R ou un terminal portable, c'est-à-dire il peut être raccordé à un réseau téléphonique RC, dans les mêmes conditions de service que s'il se trouvait à terre dans son bureau ou sa voiture, et ceci sans danger d'interférence avec des systèmes électroniques de bord de l'aéronef A, puisque la puissance de fonctionnement dudit moyen de radiocommunication R est abaissée de manière à ne pas permettre de telles interférences.

Le détenteur d'un tel moyen de radiocommunication R relié au dispositif 1 peut, par conséquent, appeler un correspondant ou être appelé par un correspondant, qui est sur un réseau téléphonique terrestre (réseau câblé RC et/ou réseau radiotéléphonique), ou qui est muni d'un moyen de radiocommunication analogue et qui se trouve :
- dans un autre aéronef équipé également d'un dispositif conforme à l'invention ; ou même
- dans le même aéronef A.

En outre, on prévoit, à proximité de chacun des sièges de passager SP, par exemple sur l'accoudoir 6 comme représenté sur la figure 1 ou sur le dossier ou la tablette, un moyen d'alimentation électrique 7, par exemple une embase de raccordement électrique, sur lequel peut être raccordé le cas échéant un système de chargement électrique du moyen de radiocommunication R, pour réaliser le chargement électrique dudit moyen de radiocommunication R.

Par ailleurs, le dispositif 1 comporte également un moyen d'inhibition 8 intégré, par exemple, dans l'unité centrale UC et susceptible d'émettre, à l'intérieur de l'aéronef A, au moyen de l'antenne 3 ou d'une antenne non représentée et prévue spécialement à cet effet, sous forme d'ondes électromagnétiques de faible puissance, des ordres d'interdiction d'émission, vers les moyens de radiocommunication R présents dans l'aéronef A. Ce moyen d'inhibition 8 peut être activé, notamment en fonction de phases de vol de l'aéronef A ou de procédures de sécurité éventuelles.

## Revendications

1. Dispositif pour permettre l'utilisation dans un aéronef (A) d'au moins un moyen de radiocommunication personnel (R), en particulier un téléphone mobile, ledit dispositif comportant :
- au moins une première antenne (2) susceptible d'émettre et de capter, à l'extérieur de l'aéronef (A), des ondes électromagnétiques (OE) respectivement captées et émises par un réseau extérieur (RC) ;
- au moins une seconde antenne (3) susceptible d'émettre et de capter, à l'intérieur de l'aéronef (A), des ondes électromagnétiques (oe) respectivement captées et émises par ledit moyen de radiocommunication (R) ; et
- un transpondeur (4) qui comprend :
. un premier système (ER1) d'émission et de réception d'ondes électromagnétiques (OE), couplé à ladite première antenne (2) ;
. un second système (ER2) d'émission et de réception d'ondes électromagnétiques (oe), couplé à ladite seconde antenne (3) ; et
. une unité centrale (UC) transmettant, le cas échéant après adaptation, des signaux reçus par l'un desdits premier et second systèmes d'émission et de réception (ER1, ER2) à l'autre système d'émission et de réception (ER2, ER1),
**caractérisé en ce que** ledit transpondeur (4) comprend de plus des moyens d'autorité (5) pour imposer audit moyen de radiocommunication (R) de fonctionner à puissance réduite et contrôler son fonctionnement et **en ce que** lesdits moyens d'autorité (5) agissent, par l'intermédiaire dudit second système d'émission et de réception (ER2) et de ladite seconde antenne (3), sur un système d'auto-adaptation de puissance intégré dans ledit moyen de radiocommunication (R).

2. Dispositif selon la revendication 1,
**caractérisé en ce que** lesdits moyens d'autorité (5) sont intégrés dans ladite unité centrale (UC).

3. Dispositif selon l'une quelconque des revendications précédentes, pour un moyen de radiocommunication (R) muni d'un système de chargement électrique,
**caractérisé en ce qu'**il comporte au moins un moyen d'alimentation électrique (7) prévu à proximité d'un siège de passager (SP) de l'aéronef (A), le système de chargement électrique du moyen de radiocommunication (R) pouvant être raccordé en vue de son chargement audit moyen d'alimentation électrique (7).

4. Dispositif selon l'une quelconque des revendications précédentes,
**caractérisé en ce qu'**il comporte un moyen d'inhibition (8) susceptible d'émettre à l'intérieur de l'aéronef (A), sous forme d'ondes électromagnétiques, des ordres d'interdiction d'émission, vers ledit moyen de radiocommunication (R).

5. Dispositif selon la revendication 4,
**caractérisé en ce que** ledit moyen d'inhibition (8) est intégré dans ladite unité centrale (UC).

## Patentansprüche

1. Vorrichtung, die es ermöglicht, in einem Flugzeug (A) mindestens ein persönliches Funkkommunikationsmittel (R), insbesondere ein Funktelefon, zu benutzen, wobei die genannte Vorrichtung folgendes umfasst:
- mindestens eine erste Antenne (2), die außerhalb des Flugzeugs (A) elektromagnetische Wellen (OE) aussenden und empfangen kann, die von einem Außennetz (RC) empfangen beziehungsweise ausgesendet werden;
- mindestens eine zweite Antenne (3), die im Inneren des Flugzeugs (A) elektromagnetische Wellen (oe) aussenden und empfangen kann, die vom genannten Funkkommunikationsmittel (R) empfangen beziehungsweise ausgesendet werden;
und
- einen Transponder (4), der folgendes umfasst:
• ein erstes System (ER1) zum Senden und Empfangen elektromagnetischer Wellen (OE), das mit der genannten ersten Antenne (2) gekoppelt ist;
• ein zweites System (ER2) zum Senden und Empfangen elektromagnetischer Wellen (oe), das mit der genannten zweiten Antenne (3) gekoppelt ist; und
• eine Zentraleinheit (UC), die gegebenenfalls nach Anpassung Signale, die sie vom genannten ersten oder vom genannten zweiten Sende- und Empfangssystem (ER1, ER2) erhält, zum anderen Sende- und Empfangssystem (ER2, ER1) überträgt,
**dadurch gekennzeichnet, dass** der genannte Transponder (4) weiterhin Freigabemittel (5) umfasst, um dem genannten Funkkommunikationsmittel (R) vorzugeben, dass es mit verringerter Leistung arbeitet, und seinen Betrieb zu steuern, sowie dadurch, dass die genannten Freigabemittel (5) über das genannte zweite Sende- und Empfangssystem (ER2) und die genannte zweite Antenne (3) auf ein System zur selbständigen Anpassung der Leistung wirken, das in das genannte Funkkommunikationsmittel (R ) integriert ist.

2. Vorrichtung gemäß Anspruch 1,
**dadurch gekennzeichnet, dass** die genannten Freigabemittel (5) in die genannte Zentraleinheit (UC) integriert sind.

3. Vorrichtung für ein mit einem elektrischen Ladesystem ausgestattetes Funkkommunikationsmittel (R) gemäß einem beliebigen der vorstehenden Ansprüche,
**dadurch gekennzeichnet, dass** es mindestens ein elektrisches Stromversorgungsmittel (7) umfasst, das in der Nähe eines Passagiersitzes (SO) des Flugzeugs (A) vorgesehen ist, wobei das elektrische Ladesystem des Funkkommunikationsmittels (R) zu seiner Ladung an das genannte elektrische Stromversorgungsmittel (7) angeschlossen werden kann.

4. Verfahren nach einem beliebigen der vorstehenden Ansprüche,
**dadurch gekennzeichnet, dass** es ein Verhinderungsmittel (8) umfasst, das im Inneren des Flugzeugs (A) Sendeverbotsbefehle in Form von elektromagnetischen Wellen zum genannten Funkkommunikationsmittel (R) senden kann.

5. Verfahren nach Anspruch 4,
**dadurch gekennzeichnet, dass** das genannte Verhinderungsmittel (8) in die genannte Zentraleinheit (UC) integriert ist.

## Claims

1. Device for allowing the use in an aircraft (A) of at least one personal radiocommunication means (R), in particular a mobile telephone, the said device comprising:
- at least one first antenna (2) able to transmit and pick up, outside the aircraft (A), electromagnetic waves (OE) respectively picked up and transmitted by an outside network (RC);
- at least one second antenna (3) able to transmit and pick up, inside the aircraft (A), electromagnetic waves (oe) respectively picked up and transmitted by the said radiocommunication means (R); and
- a transponder (4) which comprises :
• a first electromagnetic wave (OE) transmission and reception system (ER1) coupled to the said first antenna (2);
• a second electromagnetic wave (oe) transmission and reception system (ER2) coupled to the said second antenna (3) ; and
• a central unit (UC) which sends, if relevant after matching, signals received by one of the said first and second transmission and reception systems (ER1, ER2) to the other transmission and reception system (ER2, ER1),
**characterized in that** the said transponder (4) furthermore comprises means of authority (5) for compelling the said radiocommunication means (R) to operate at reduced power and for controlling the operation thereof and **in that** the said means of authority (5) act, by way of the said second transmission and reception system (ER2) and the said second antenna (3), on a power auto-matching system built into the said radiocommunication means (R).

2. Device according to Claim 1,
**characterized in that** the said means of authority (5) are built into the said central unit (UC).

3. Device according to either of the preceding claims, for a radiocommunication means (R) furnished with an electrical charging system,
**characterized in that** it comprises at least one electrical supply means (7) provided in proximity to a passenger seat (SP) of the aircraft (A), it being possible for the electrical charging system of the radiocommunication means (R) to be plugged, with a view to the charging thereof, into the said electrical supply means (7).

4. Device according to any of the preceding claims,
**characterized in that** it comprises a disabling means (8) able to transmit inside the aircraft (A), in the form of electromagnetic waves, transmission prohibition commands to the said radiocommunication means (R).

5. Device according to Claim 4,
**characterized in that** the said disabling means (8) is built into the said central unit (UC).
